Europäisches Patentamt

European Patent Office

Office européen des brevets

(11) Publication number: **0 438 824 A1**

# EUROPEAN PATENT APPLICATION

(21) Application number: **90203320.8**

(22) Date of filing: **13.12.90**

(51) Int. Cl.⁵: **F16L 3/12**, F16L 17/03

(30) Priority: **28.12.89 IT 2231789 U**

(43) Date of publication of application:
**31.07.91 Bulletin 91/31**

(84) Designated Contracting States:
**BE FR IT LU NL**

(71) Applicant: **Cecchi, Enzo**
**Piazza Nazioni Unite 3**
**Marina di Carrara (Massa Carrara)(IT)**

(72) Inventor: **Cecchi, Enzo**
**Piazza Nazioni Unite 3**
**Marina di Carrara (Massa Carrara)(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) **Joint element with wall mounting for lenghts of discharge pipes from cisterns or water tanks for sanitary installations.**

(57) Joint element with wall mounting for lengths of discharge pipes from water tanks for sanitary installations that is constituted of a rigid body (1) of cylindrical shape, inside which is disposed an elastic sleeve (5) of rubber or similar material having, in an axially median position, a projecting stop ring and, at each of the ends, a conical ring (10) with lip (11) projecting towards the interior and towards the centre of the sleeve in the axial direction, said first central ring constituting the stop for the end of the pipe (9) introduced in an axial direction and said second conical ring (10) with lip being provided for the hydraulic sealing and mechanical holding, solely be compression of the lip (11) against the outer wall face of the pipe (9) without the use of adhesive, clamping devices or the like.

EP 0 438 824 A1

## JOINT ELEMENT WITH WALL MOUNTING FOR LENGTHS OF DISCHARGE PIPES FROM CISTERNS OR WATER TANKS FOR SANITARY INSTALLATIONS

The subject of the present invention is a joint element with wall mounting for lengths of discharge pipes from cisterns or water tanks for sanitary installations.

As is known in the art of application of tanks, cisterns or the like for containing and discharging water into WC bowls, wash-basins or the like, where a strong flow of water is required at a high rate and for a short time, the cistern or water tank must be mounted at an appreciable height above the WC basin and connected to it, by means of a pipe of relatively large diameter, in such a way as to cause a predetermined quantity of water to descend at high velocity and in a short time for the purpose of giving it an appreciable impact velocity for cleaning out the basin and detaching and conveying away any residues adhering to said basin.

For this purpose, the cistern or tank for containing water is connected to the bowl or basin by means of a down pipe normally composed of lengths of rigid pipe of plastics material, disposed successively and joined together in such a manner as to be capable of following a not strictly straight path and to be capable of taking up any play of modest value, said pipes then being fixed by securing means to the walls.

The joining together of the pipes with a possibility of fixing to the wall presents, however, the technical problem which, in the known joints, is resolved by means of supports with adhesive, mechanical clamping or the like: said joints being, however, subject to deterioration with time or to deformation, fracture, cracking or the like during the installation operation, which makes them unserviceable and dangerous during use.

In particular, in such types of known joints, the application of adhesive requires that the front end faces of the pipes to be connected together shall be perfectly plane and smooth and constructed accurately to measurement with very strict tolerances, requiring considerable attention and ability on the part of the person installing, in view also of the possibility of inadequate diffusion of the adhesive around the entire perimeter.

The joint according to the present invention eliminates said disadvantages and makes possible a secure and reversible, immediate application, even by non-specialized installation personnel, being composed of a joint element for connecting together lengths of pipe used for discharging water from cisterns or tanks for sanitary installations, wash-basins or the like, whether external or recessed in the wall, in which the junction between the ends of the pipes is made by means of an elastic sleeve of rubber or similar material having, in the middle in the axial sense, a projecting stop ring and, at each of the ends, a conical ring with a lip projecting towards the interior and directed towards the centre of the sleeve in the axial sense, said first, central ring constituting the stop ledge for the end of the pipe introduced in the axial direction and said second ring with a conical lip being provided for the hydraulic seal solely by compression of the lip against the outer face of the pipe without the introduction of adhesive, clamping or similar devices.

Further details will be understood from the following description, prepared with reference to the attached drawings, in which there are shown:

in Figure 1: an axial section through the joint in a direction perpendicular to the wall, showing the sealing gland but with the pipe not introduced;

in Figure 2: the joint of Fig. 1, complemented by the base for fitting to the wall, as viewed along the axis and

in Figure 3: a partial section through the joint of Fig. 1 with the pipe inserted.

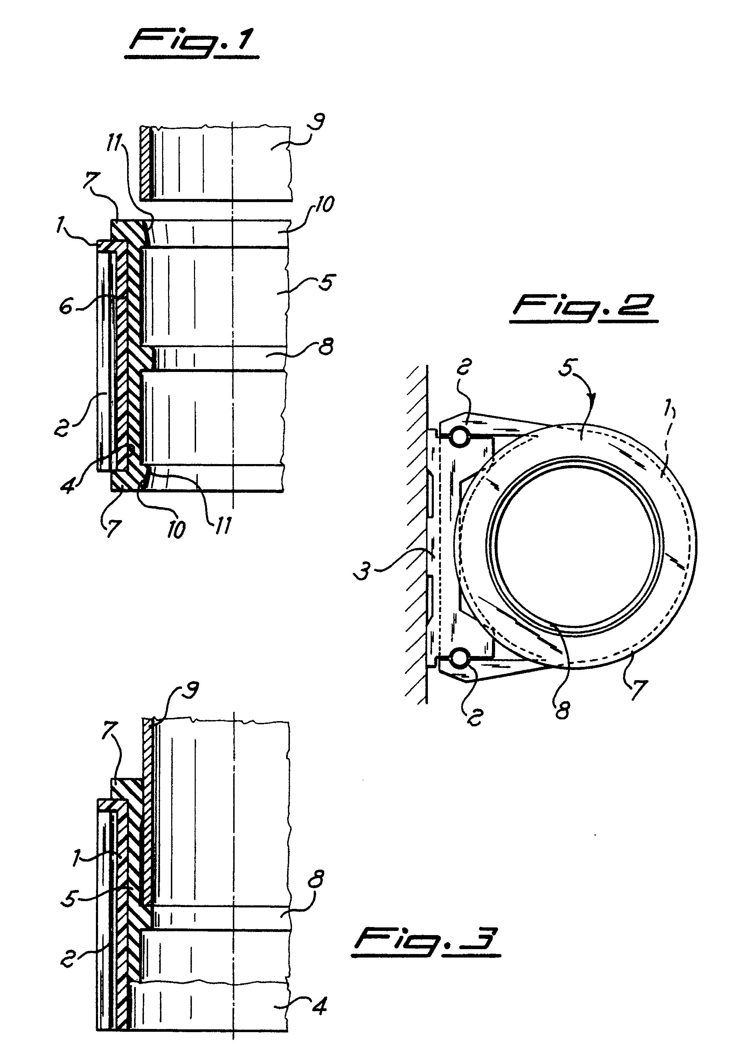

With reference to Fig. 1, the joint comprises a body 1 of plastics material or the like of cylindrical shape, terminating with parallel guides 2 for connecting to the base 3, which can be fixed to the wall, the internal bore 4 of the cylindrical part being smooth and uniform without projections or the like.

The jointing and sealing gland 5 is formed of an elastic material or the like, such as rubber or flexible plastics material or the like, which is shaped as a cylinder having an external surface 6 terminating in two projections 7 at the ends, adapted for bearing against the circular rim of the body 1 in such a manner as to block the gland firmly in the axial direction against the body.

Said gland possesses, inside and in the median axial position, a ring 8 projecting in the radial direction and having a thickness approximately equal to that of the pipe 9 to be inserted, so as to form a stop ledge preventing axial advance of the pipe and, at each end, a conical ring 10 terminating in a lip 11 in the radial direction, the diameter of the edge of which is slightly smaller than the minimum diameter of the pipe 9 to be connected.

On installation, the end of the pipe 9 is forced axially into the ring 10, by causing it to slide towards the centre in such a way that the lip 11 is compressed with squashing and deformation towards the centre, preventing both the escape of fluid passing through the pipe and any pulling-out of the pipe as a result of small bedding-down movements.

The internal stop ring has, however, only the function of arresting the pipe in the axial direction and not of sealing, and so the end of the pipe may also be not perfectly smooth or plane, but even jagged and/or inclined, without representing any cause of loss of fluid, the taking-up of any axial play of the pipes resulting from imperfect cutting to length being also possible with the joint according to the present invention.

**Claims**

1. Joint element with wall mounting for lengths of discharge pipes from water tanks for sanitary installations, characterized in that it is constituted of a rigid body of cylindrical shape, inside which is disposed an elastic sleeve of rubber or similar material having, in an axially median position, a projecting stop ring and, at each of the ends, a conical ring with lip projecting towards the interior and towards the centre of the sleeve in the axial direction, said first central ring constituting the stop for the end of the pipe introduced in an axial direction and said second conical ring with lip being provided for the hydraulic sealing and mechanical holding, solely be compression of the lip against the outer wall face of the pipe without the use of adhesive, clamping devices or the like.

2. Joint element with wall mounting according to Claim 1, characterized in that said sleeve possesses, at each end, a projection adapted for bearing against the rim of the rigid body, for blocking said sleeve against said rigid body.

3. Joint element with wall mounting according to Claim 1, characterized in that said rigid body has parallel guides for engagement with an element for fixing to the wall.

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 682 503 (BLOOM)<br>* the whole document *<br>– – – | 1-3 | F 16 L 3/12<br>F 16 L 17/03 |
| Y | FR-A-1 278 315 (AB PLASTICS LTD)<br>* page 3, left column, line 31 - line 48 *<br>– – – | 1-3 | |
| A | EP-A-0 310 177 (JÄDERBERG)<br>* column 3, line 32 - line 36; figures 1,5 *<br>– – – | 1-3 | |
| A | US-A-2 245 153 (MCWANE)<br>* page 1, left column, line 51 - right column, line 7; figure 3 *<br>– – – – – | 1 | |
|  |  |  | **TECHNICAL FIELDS SEARCHED (Int. Cl.5)**<br><br>F 16 L |

The present search report has been drawn up for all claims

| Place of search | Date of completion of search | Examiner |
|---|---|---|
| The Hague | 04 April 91 | VAN BEURDEN J.J.C.A. |